# EUROPEAN PATENT APPLICATION

(11) **EP 3 035 722 A1**
(43) Date of publication of application: **22.06.2016**
(21) Application number: 14307107.4
(22) Date of filing: 19.12.2014
(51) Int. Cl.: H04W 8/18

(54) **Packet data flow control**

(71) Applicant: ALCATEL LUCENT, 92100 Boulogne-Billancourt (FR)
(72) Inventor: Casati, Alessio, Swindon, Wiltshire SN5 7DJ (GB)
(74) Representative: Leppard, Andrew John

(57) **Abstract**

Auser equipment method, user equipment, a network node method, a network node and a computer program product are disclosed. The user equipment method comprises receiving an active services set indication identifying at least one user traffic packet data flow that is to continue to be active when the user equipment is configured into a packet data off mode. In this way, individual packet data flows within a packet data network connection may be identified as remaining active even when the user equipment is no longer in a data on mode. This enables individual services to be maintained even when the user equipment is in a data off mode.

## Description

### FIELD OF THE INVENTION

The present inventions relates to a user equipment method, user equipment, a network node method, a network node and a computer program product.

### BACKGROUND

Wireless telecommunications systems are known. In a cellular system, radio coverage is provided to user equipment, for example, mobile telephones, by areas known as cells. Abase station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

Existing user equipment support services provided using both packet switched and circuit switched networks. Existing modes of operating such user equipment and existing services offered by network operators reflect the provision of services provided using both packet switched and circuit switched networks.

Although these approaches have been convenient, they also have their own shortcomings. Accordingly, it is desired to provide improved techniques for operating wireless telecommunications networks.

### SUMMARY

According to a first aspect, there is provided a user equipment method, comprising: receiving an active services set indication identifying at least one user traffic packet data flow that is to continue to be active when the user equipment is configured into a packet data off mode.

The first aspect recognizes that users of cellular services are accustomed to being able to turn off data services (always, or just while roaming). This is, for example, to avoid roaming charges for data usage or to save data consumption when the user is close to exhausting their quota and prefers to just use Wi-Fi when available, while still being able to use voice and short messaging service (SMS), which in many cases are considered to be more essential to the nature of the user equipment. However, as voice services and SMS services transition to being provided over the IP multimedia subsystem (IMS) it is desirable to replicate the same behaviour. However, voice and SMS using IMS would be supported itself by a data connection, so disabling data services altogether would also disable voice and SMS services. In fact, there are a range of services that may be desired to be maintained such as, for example, IR.92/IR.58 voice, IR.92 SMS, Service management: Service management traffic shall be treated as signalling traffic, Provisioning via SMS, subscriber identification module over the air (SIM OTA) and Extensible Markup Language (XML) data, Supplementary Services Data (USSD) simulation in IMS (USSI) (not included in IR.92), IR.94 video call, RCS, Rich Communication Services (RCS) Messaging/chat, RCS IP Video, VideoShare, ImageShare. Hence, the first aspect recognizes that it is desirable to enable operators to define a set of services that are still available when the user equipment is set not to support data services or at least those that would not result in an increase of the data quota usage in a billing period.

Accordingly, a method is provided. The method may be performed by a user equipment. The method may comprise receiving an indicator identifying one or more user traffic packet data flows that are to continue to be active or operational even when the user equipment is configured to operate in a packet data off mode. In this way, individual packet data flows within a packet data network connection may be identified as remaining active even when the user equipment is no longer in a data on mode. This enables individual services to be maintained even when the user equipment is in a data off mode.

In one embodiment, the active services set indication identifies at least one access point name associated with each the at least one user traffic packet data flow. Accordingly, the identifier identifies one or more access point names which correspond with each packet data flow. Hence, packet data flows for particular access point names may be maintained when in the data off mode.

In one embodiment, the active services set indication identifies at least one application associated with each the at least one user traffic packet data flow. Accordingly, the indication identifies one or more applications, typically using an application ID, which corresponds with each packet data flow. This enables individual packet data flows for individual applications being executed on the user equipment to be maintained even when the user equipment is in the data off mode.

It will be appreciated that disabling all access point names except the IMS access point name is typically not viable, as the IMS itself may be used to support a variety of services on top of those mentioned above and which are not considered basic capabilities or which are zero rated in terms of data volume. It will also be appreciated that limiting actions in the user equipment only (like provisioning a set of application IDs in the USIM) is not flexible and may require reconfiguring the device with new values of allowed applications when the zero rated service set changes over time. In addition, the operator may need to stop traffic downlink on PDN connections that are allowed in the data off mode for applications that are disabled, so user equipment based solutions only are not suitable.

In one embodiment, the active services set indication comprises an active services set identifier corresponding with the at least one user traffic packet data flow. Accordingly, the indication also comprises an identifier which corresponds with the one or more packet data flows. That is to say, each combination of packet data flows has an associated unique identifier associated therewith.

In one embodiment, the active services set indication identifies user traffic packet data flows that are to cease to be active when the user equipment is configured into a packet data off mode. Accordingly, it is also possible to identify those data flows which are not to remain operational or active when the user equipment is in the data off mode.

In one embodiment, the active services set indication is received during one of an attach and a mobility event. This ensures that the user equipment is kept up-to-date with the set of packet data flows or services that can continue to be used in the data off mode.

In one embodiment, the method comprises providing the active services set identifier during at least one of an attach and a mobility event. Accordingly, the user equipment may provide the unique identifier for that combination of data flows that are currently enabled in the data off mode. This enables the network to determine whether that corresponds with the current configuration for that user equipment and so prevents the need to retransmit that information if the two match.

In one embodiment, the method comprises providing a data mode indication during at least one of an attach and a mobility event. Accordingly, the user equipment indicates which mode it is in during the attach or mobility event.

In one embodiment, the method comprises providing the data mode indication when the user equipment is configured to change between the packet data on mode and the packet data off mode. Accordingly, the user equipment indicates to the network when switching between data on and data off modes.

In one embodiment, the method comprises preventing establishment of any further user traffic packet data flows while in the packet data off mode. Accordingly, no additional packet data flows may be established while in the data off mode.

In one embodiment, the method comprises allowing establishment of further user traffic packet data flows when the user equipment is configured into the packet data on mode. Accordingly, additional data flows may then be established when the user equipment is in the data on mode.

According to a second aspect, there is provided user equipment, comprising: reception logic operable to receive an active services set indication identifying at least one user traffic packet data flow that is to continue to be active when the user equipment is configured into a packet data off mode.

In one embodiment, the active services set indication identifies at least one access point name associated with each the at least one user traffic packet data flow.

In one embodiment, the active services set indication identifies at least one application associated with each the at least one user traffic packet data flow.

In one embodiment, the active services set indication comprises an active services set identifier corresponding with the at least one user traffic packet data flow.

In one embodiment, the active services set indication identifies user traffic packet data flows that are to cease to be active when the user equipment is configured into a packet data off mode.

In one embodiment, the reception logic is operable to receive the active services set indication during one of an attach and a mobility event.

In one embodiment, the user equipment comprises transmission logic operable to provide the active services set identifier during at least one of an attach and a mobility event.

In one embodiment, the transmission logic is operable to provide a data mode indication during at least one of an attach and a mobility event.

In one embodiment, the transmission logic is operable to provide the data mode indication when the user equipment is configured to change between the packet data on mode and the packet data off mode.

In one embodiment, the user equipment comprises control logic operable to prevent establishment of any further user traffic packet data flows while in the packet data off mode.

In one embodiment, the control logic is operable to allow establishment of further user traffic packet data flows when the user equipment is configured into the packet data on mode.

According to a third aspect, there is provided a network node method, comprising: providing an active services set indication identifying at least one user traffic packet data flow that is to continue to be active when the user equipment is configured into a packet data off mode.

Accordingly, a method is provided. The method may be performed by a network node. The method may comprise providing an indication which identifies one or more packet data flows that are to continue to be active or operational when the user equipment is in a data off mode.

In one embodiment, the active services set indication identifies at least one access point name associated with each the at least one user traffic packet data flow.

One embodiment, the active services set indication identifies at least one application associated with each the at least one user traffic packet data flow.

In one embodiment, the active services set indication comprises an active services set identifier corresponding with the at least one user traffic packet data flow.

In one embodiment, the active services set indication identifies user traffic packet data flows that are to cease to be active when the user equipment is configured into a packet data off mode.

In one embodiment, the active services set indication is provided during one of an attach and a mobility event.

In one embodiment, the method comprises receiving from a user equipment a current active services set identifier identifying a currently configured at least one user traffic packet data flow that is to continue to be active when the user equipment is configured into a packet data off mode. Hence, the identifier which identifies the current data flows that continue to be active when the user equipment is in the data off mode is provided. It will be appreciated that this reduces the amount of information that needs to be conveyed.

In one embodiment, the active services set indication is provided when an active services set identifier for the user equipment differs to the current active services set identifier for that user equipment. Hence, should the identifier provided by the user equipment match the identifier associated with the data flows which are to be configured within the user equipment, then the network note is able to determine that the user equipment is correctly configured and so avoids the need to retransmit the indication to the user equipment.

In one embodiment, the method comprises receiving a data mode indication during at least one of an attach and a mobility event.

In one embodiment, the method comprises determining packet data network connections to release in response to receiving the data mode indication indicating that the user equipment is configured into the packet data off mode. Accordingly, when the user equipment switches to the data off mode the data network connections which need to be released are determined. In one embodiment, those data network connections are then released.

In one embodiment, the method comprises determining packet data network connections to maintain in response to receiving the data mode indication indicating that the user equipment is configured into the packet data off mode. Accordingly, the data network connections which need to be maintained may also be determined.

In one embodiment, the method comprises determining packet data network connections to maintain but prevent onward flow of user traffic packet data in response to receiving the data mode indication indicating that the user equipment is configured into the packet data off mode. Accordingly, although a data network connection is maintained, individual packet data flows within that connection may be filtered in order to prevent onward flow of packet data within that flow. This enables some applications to continue to communicate with an APN while others are prevented. This also enables connections to be maintained in order to avoid signalling overhead when switching between modes.

In one embodiment, a guard time is applied before which any changes to the network connections are made. This avoids unnecessary signalling, should the user inadvertently change between data on and data off modes.

In one embodiment, the method comprises determining packet data network connections to re-establish in response to receiving the data mode indication indicating that the user equipment is configured into the packet data on mode. In one embodiment, the network connections are then re-established.

In one embodiment, the method comprises determining packet data network connections to re-enable onward flow of user traffic packet data in response to receiving the data mode indication indicating that the user equipment is configured into the packet data on mode. In one embodiment, the network connections are then re-enabled.

According to a fourth aspect, there is provided a network node, comprising: transmission logic operable to provide an active services set indication identifying at least one user traffic packet data flow that is to continue to be active when the user equipment is configured into a packet data off mode.

In one embodiment, the active services set indication identifies at least one access point name associated with each the at least one user traffic packet data flow.

In one embodiment, the active services set indication identifies at least one application associated with each the at least one user traffic packet data flow.

In one embodiment, the active services set indication comprises an active services set identifier corresponding with the at least one user traffic packet data flow.

In one embodiment, the active services set indication identifies user traffic packet data flows that are to cease to be active when the user equipment is configured into a packet data off mode.

In one embodiment, the transmission logic is operable to provide the active services set indication during one of an attach and a mobility event.

In one embodiment, the network node comprises reception logic operable to receive from a user equipment a current active services set identifier identifying a currently configured at least one user traffic packet data flow that is to continue to be active when the user equipment is configured into a packet data off mode.

In one embodiment, the transmission logic is operable to provide the active services set indication when an active services set identifier for the user equipment differs to the current active services set identifier for that user equipment.

In one embodiment, the reception logic is operable to receive a data mode indication during at least one of an attach and a mobility event.

In one embodiment, the network node comprises control logic operable to determine packet data network connections to release in response to receiving the data mode indication indicating that the user equipment is configured into the packet data off mode.

In one embodiment, the control logic is operable to determine packet data network connections to maintain in response to receiving the data mode indication indicating that the user equipment is configured into the packet data off mode.

In one embodiment, the control logic is operable to determine packet data network connections to maintain but prevent onward flow of user traffic packet data in response to receiving the data mode indication indicating that the user equipment is configured into the packet data off mode.

In one embodiment, the control logic is operable to determine packet data network connections to re-establish in response to receiving the data mode indication indicating that the user equipment is configured into the packet data on mode.

In one embodiment, the control logic is operable to determine packet data network connections to re-enable onward flow of user traffic packet data in response to receiving the data mode indication indicating that the user equipment is configured into the packet data on mode.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the overall concept according to embodiments including data off/ on notifications and related acknowledgments;
Figure 2 illustrates an MME-initiated PDN disconnection procedure defined in TS 23.401 according to embodiments;
Figure 3 illustrates an MME-initiated PDN conditioning procedure for data off according to embodiments; and
Figure 4 illustrates an MME initiated revocation of PDN conditioning procedure for data off according to embodiments.

### DESCRIPTION OF THE EMBODIMENTS

Before discussing the embodiments in any more detail, first an overview will be provided. Embodiments provide a technique whereby individual packet data flows may be identified to continue to be maintained even when the user equipment is in a data off mode. This enables core services such as voice, SMS and the like to be maintained when those services are provided using packet data connections even when the user has disabled data. These services are generally zero rated, meaning that they do not contribute towards the user's data quota. This enables the user to enter the data off mode while still maintaining these core services which have typically been previously provided by a circuit-switched functionality. The data flows may be identified using corresponding access point names for which those data flows are intended or using application identifiers which identify a user application operating on the user equipment corresponding with that data flow since the data flow is either transmitted to or from that application. The user equipment may indicate to the network its current configuration and whether it is in the data on or data off mode when attaching to the network or during a mobility event. The network can then determine whether the user equipment is correctly configured and, if not, can update its configuration. This ensures that the user equipment remains configured correctly and minimizes the need to retransmit a correct configuration. When the user equipment is in the data off mode, the network can decide whether to tear down any network connections, or whether to maintain them but disable all or some of the data flows over those connections. When the user equipment returns to the data on mode, then those connections may be re-established and/or the data flows permitted.

Hence, when the user equipment (UE) attaches to the network, it declares whether it is in a data on mode or a data off mode during the attach procedure. At the attach time, the UE is typically provisioned with the set of operating system (OS)-specific application identifiers (IDs) (assuming that the International Mobile Station Equipment Identity Software Version (IMEI-SV) is acquired during the attach procedure) and/or access point name(s) (APN(s)) that are allowed to be operational and support user traffic packet data flows in the data off mode. These parameters are typically passed via Non-Access Stratum (NAS) signalling or can be pushed using user plane configuration methods like Open Mobile Alliance Device Management (OMA-DM). In the UE, the parameters are typically maintained as list of application IDs and APNs that are allowed to be used in the data off mode which may be passed in the NAS procedure described above at attach time, or by using a separate OAM procedure, or provisioned in the Universal Subscriber Identity Module (USIM) - although this is a less flexible approach.

At any time, when the UE switches to the data off mode to switch data off, the UE uses a signalling procedure to notify the network. The network then, based on a data off profile, which may be specific per operator or even subscribers set, takes the relevant actions to disable the relevant packet data network (PDN) connections and to keep the relevant PDN connections that can be active during the data off setting. This can involve either tearing down those PDN connections completely or just disabling (filtering out) traffic for those services for which user traffic packet data flows are not permitted. An advantage of maintaining PDN connections and disabling traffic is that this reduces reconfiguration overhead.

For those PDN connections which are kept, traffic is disabled for those services that are not zero rated as part of the data off profile. This causes the network to stop downlink (DL) traffic for services not included in the active services set when data is off. This can also cause the network to also drop any errant uplink (UL) traffic for services not included in the active services set when data is off.

At any time, when the mode is changed from data off to data on, the UE uses a signalling procedure to notify the network. The network then re-establishes the PDN connections (or removes the filtering) and enables all the applications on all PDNs which were stopped when the data off mode was set.

### Example Operation

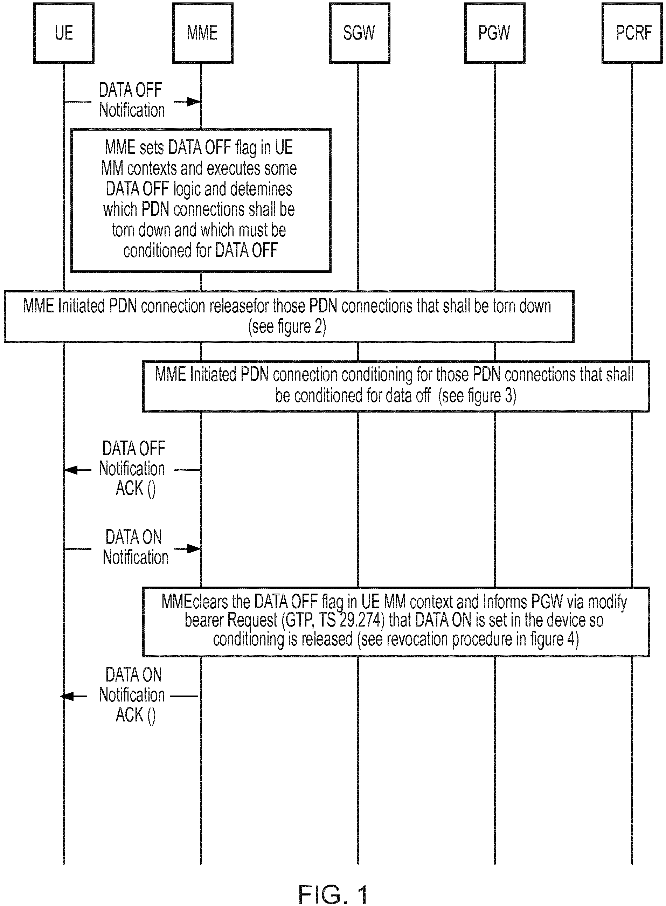

Figure 1 shows an example operation of the network according to one embodiment. When the UE attaches to the network or undergoes a mobility event it declares whether data is on or off by providing an indication in the attach procedure described in TS 23.401. The UE may also provide a current active services set identifier which is associated with any currently configured set of OS- specific allowed application IDs and allowed APN(s) in the data off mode.

During the attach procedure or other Mobility Management procedure, the UE is provisioned with the set of OS- specific allowed application IDs (assuming IMEI-SV is acquired at attach) and allowed APN(s) in the data off mode, which also has an active services set identifier for that combination of OS- specific allowed application IDs and allowed APN(s) in the data off mode. This is typically provided during each attach procedure or other Mobility Management procedure since the operator may change the list of APNs and/or OS-specific applications. Should the current active services set identifier match that of the active services set identifier, then this indicates that the UE is already correctly provisioned and this provisioning step may be omitted.

In particular, the UE receives from the MME (or SGSN if the UE is under 2G/3G coverage) at attach time or other MM procedures in NAS signalling the list of Operating system application IDs that constitute the active services set when data is off. The OS is detected by inspection of the IMEI-SV at attach time and also at MM procedure. Other configuration methods can also be used (e.g. OMA-DM or SIM configuration methods) but these then may require UE configuration steps when the policies in the network change. This is not shown in Figure 1 as Figure 1 shows a transition to data off after attach time.

In this example, the UE indicates that it is configured into the data off mode. The mobility management entity (MME) sets a flag in the UE mobility management (MM) contexts. The PDN connections for APNs which are not to be enabled (or which are allowed to be enabled if a whitelist approach is used where the data flows are maintained but filtered) when the data off mode is set are not activated (or are activated if whitelist approach is used) (including any default bearers). If this results in no PDN connection activation, the attach procedure fails (in other words the UE may only attach to the circuit switched (CS) domain - but this condition should never happen if voice over internet protocol (VoIP) is used as at least the IP Multimedia Subsystem (IMS) APN should be active).

### Data Off

When the UE is set to the data off mode from the data on mode, the UE uses a Non access stratum signalling procedure to notify the MME (or SGSN if the UE is under 2G/ 3G coverage). The MME stores the data off UE status in the UE Mobility Management context when this information is obtained.

The MME (or SGSN if the UE is under 2G/ 3G coverage) has received in subscription data for APNs from the Home Subscriber Server (HSS) whether the related PDN connections can be kept active when data is off (not shown in Figure 1 as this is just showing a transition to the data off mode after the UE is already attached, and subscription data is received from the HSS at attach time).

### PDN Connection Release

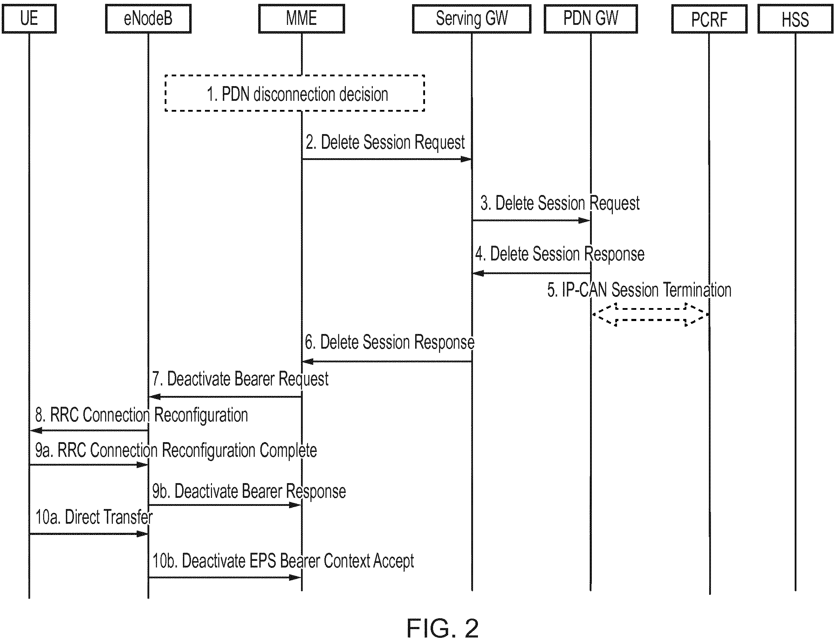

Figure 2 illustrates the PDN connection release procedure in more detail. The decision to disconnect a PDN connection is taken because data flows over that connection are either directed to an APN which is not to be enabled during the data off mode or because data flows over that connection are intended for an application which is not to support a data flow during the data off mode. A delete session request is conveyed to the packet gateway associated with that PDN connection which may delete the PDN connection in conjunction, optionally, with information provided from the Policy and Charging Rules Function. Hence, those PDN connections that cannot be kept active, which is defined by subscriber data, are released with by the MME-initiated PDN connection release procedure.

### PDN Connection Maintain and Filter

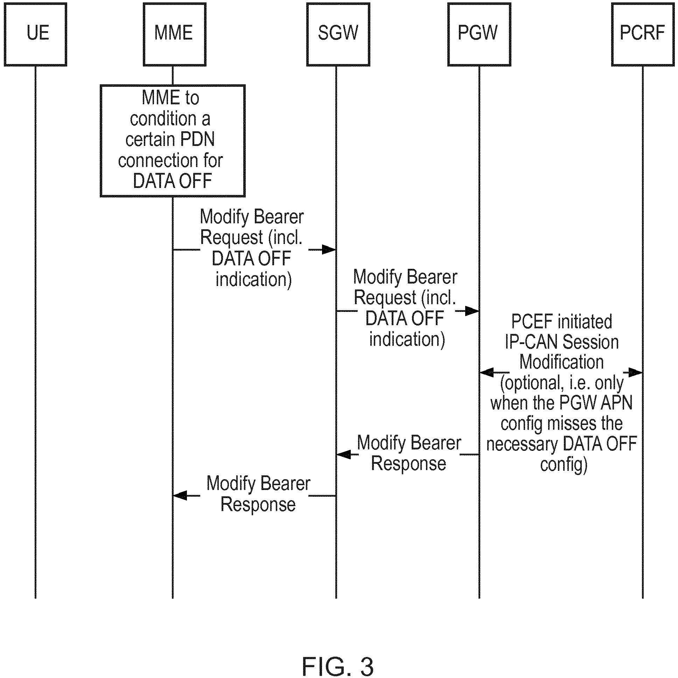

As show in Figure 3, additionally, or alternatively, the MME informs the PGWs of the remaining PDN connections that the UE is set to the data off mode using a General Packet Radio Service Tunnelling Protocol (GTP) Modify Bearer Request message; this provides for a PDN conditioning or filtering procedure for the data off mode where data flows are dropped at the PGW. When this message is received, the PGW may inform the PCRF so it causes the PCRF to pass to the PGW packet filters, which are installed in the PGW, by which the PCRF disables or zero rates specific traffic (i.e. all traffic except that which is zero rated). These can be application detection and control (ADC) rules as defined in TS 23.203. Alternatively, the PGW is locally configured with the same rules for when the data off mode applies and the PCRF is not invoked.

Returning now to Figure 1, the MME provides a data off notification acknowledgement to the UE. After receiving the data off notification acknowledgement, the UE is not permitted to establish any more PDN connections (if restricted) until the data on mode is set.

### Data On

When the UE is set again to the data on mode, it informs the MME (or SGSN if the UE is under 2G/ 3G coverage) via NAS signalling.

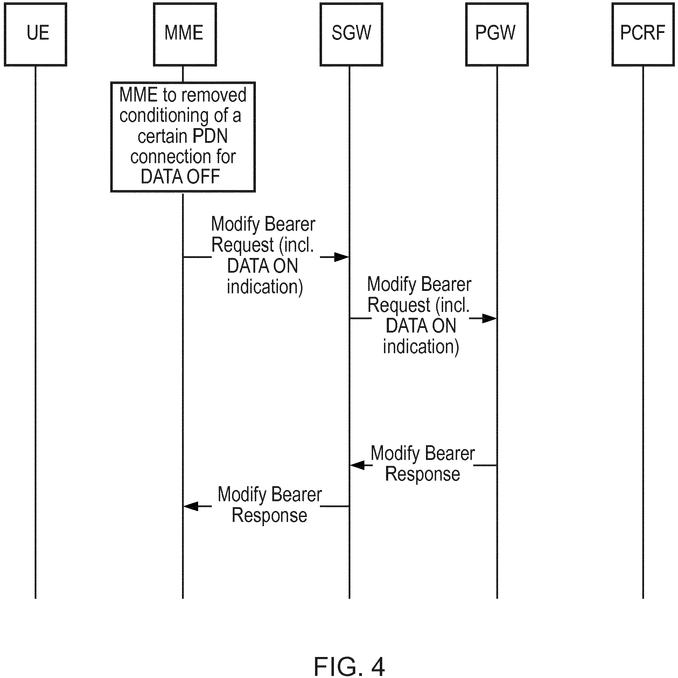

As illustrated in Figure 4, the MME (or SGSN if the UE is under 2G/ 3G coverage) then proceeds to remove the data off status from the UE MM context and informs the PGWs via a GTP modify bearer request that the data on configuration is active in the UE so that the PGW stops any enforcement of filtering rules on traffic related to data off policies and also informs the PCRF of this change if the PCRF was involved in the PDN condition for data off procedure.

The UE stops enforcing any data off related policy and also any PDN connections can be established again if applications in the UE request it.

The UE shall also store the user decision regarding data off or data on in order to send it to the MME at Location Area (LA)/Routing Area (RA)/Tracking Area (TA) Update Request. This status information is also transferred between network nodes at handover time.

Embodiments address the need to replicate the data off experience behaviour in a network controlled way when the UE is in LTE coverage and VoLTE is used, and also enables a more general framework to enable operators to let users select the use of "zero rated applications only".

UE based solutions are not sufficient as they do not cater for DL traffic and also they are inferior as each UE needs specific configuration and changing it is much more inconvenient than just using a subscription profile in the HSS.

Embodiments provide a method whereby the network is involved in controlling the active services set when data is off. Using this method allows an update of the data off policy for a large number of devices by just changing a simple data off profile for all subscribers in the HSS (or subsets of subscribers). UE based solutions would require updating all devices with new policies and may take a long time until this takes effect uniformly, at great provisioning cost.

Accordingly, embodiments provide a method by which a UE informs the network when the users set it to data off and data off.

Embodiments also provide a method by which the data off/on is declared in the attach procedure

Embodiments also provide a method by which in the attach procedure the UE is provided with the set of APNs that are allowed in data off.

Embodiments also provide a set of OS specific application IDs that are allowed when the UE is in data off.

Embodiments also provide a method by which the steps mentioned above can be optimized by the UE e.g. by declaring an identifier the UE keeps of the last received information for the APNs and for the application ID's (separately) so that this is compared with the most recent one in the network and if it is up to date the information is not sent to the UE as it would be the same as the UE already knows.

Embodiments also provide a method by which the MME informs the PGW of data on or off.

Embodiments also provide a method by which the network releases the PDN connections not allowed when data is off, when the network is notified the UE is set to data off.

Embodiments also provide for configuring and storing the list of APNs and/or application-ids per possible OS in the HSS, whenever it can be per subscriber or for all subscribers.

Embodiments also provide configuration in the SGSN or MME if HSS subscriber data is not available yet (if the data off behaviour is valid in a home network only or subject to roaming agreements).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Auser equipment method, comprising:
receiving an active services set indication identifying at least one user traffic packet data flow that is to continue to be active when said user equipment is configured into a packet data off mode.

2. The method of claim 1, wherein said active services set indication identifies at least one of:
at least one access point name associated with each said at least one user traffic packet data flow; and
at least one application associated with each said at least one user traffic packet data flow.

3. The method of claim 1 or 2, wherein said active services set indication comprises an active services set identifier corresponding with said at least one user traffic packet data flow.

4. The method of any preceding claim, wherein said active services set indication is received during one of an attach and a mobility event.

5. The method of any preceding claim, comprising providing said active services set identifier during at least one of an attach and a mobility event.

6. The method of any preceding claim, comprising providing a data mode indication during at least one of an attach and a mobility event.

7. The method of claim 6, comprising providing said data mode indication when said user equipment is configured to change between said packet data on mode and said packet data off mode.

8. The method of any preceding claim, comprising preventing establishment of any further user traffic packet data flows while in said packet data off mode.

9. The method of any preceding claim, comprising allowing establishment of further user traffic packet data flows when said user equipment is configured into said packet data on mode.

10. User equipment, comprising:
reception logic operable to receive an active services set indication identifying at least one user traffic packet data flow that is to continue to be active when said user equipment is configured into a packet data off mode.

11. A network node method, comprising:
providing an active services set indication identifying at least one user traffic packet data flow that is to continue to be active when said user equipment is configured into a packet data off mode.

12. The method of claim 11, wherein said active services set indication is provided when an active services set identifier for said user equipment differs to a current active services set identifier for that user equipment.

13. The method of claim 11 or 12, comprising determining at least one of:
packet data network connections to release in response to receiving said data mode indication indicating that said user equipment is configured into said packet data off mode;
packet data network connections to maintain in response to receiving said data mode indication indicating that said user equipment is configured into said packet data off mode;
packet data network connections to maintain but prevent onward flow of user traffic packet data in response to receiving said data mode indication indicating that said user equipment is configured into said packet data off mode;
packet data network connections to re-establish in response to receiving said data mode indication indicating that said user equipment is configured into said packet data on mode;
packet data network connections to re-enable onward flow of user traffic packet data in response to receiving said data mode indication indicating that said user equipment is configured into said packet data on mode.

14. A network node, comprising:
transmission logic operable to provide an active services set indication identifying at least one user traffic packet data flow that is to continue to be active when said user equipment is configured into a packet data off mode.

15. A computer program product operable, when executed on a computer, to perform the method of any one of claims 1 to 10 and 11 to 13.
